# EUROPÄISCHE PATENTSCHRIFT

(11) **EP 2 952 981 B1**
(45) Veröffentlichungstag und Bekanntmachung des Hinweises auf die Patenterteilung: **14.08.2019**
(21) Anmeldenummer: 15158929.8
(22) Anmeldetag: 13.03.2015
(51) Int. Cl.: G05B 15/02, G05B 19/042

(54) **VERFAHREN ZUM BETREIBEN EINER GEBÄUDEINSTALLATION MIT EINEM SITUATIONSWÄCHTER SOWIE GEBÄUDEINSTALLATION MIT EINEM SITUATIONSWÄCHTER**
METHOD FOR OPERATING A BUILDING INSTALLATION WITH A SITUATION MONITOR AND BUILDING INSTALLATION WITH A SITUATION MONITOR
PROCÉDÉ DE FONCTIONNEMENT D'UNE INSTALLATION DE BÂTIMENT DOTÉE D'UN CONTRÔLEUR DE SITUATION ET INSTALLATION DE BÂTIMENT DOTÉE D'UN CONTRÔLEUR DE BÂTIMENT

(30) Priorität: 02.06.2014 DE 102014107683
(43) Veröffentlichungstag der Anmeldung: 09.12.2015
(73) Patentinhaber: Insta GmbH, 58509 Lüdenscheid (DE)
(72) Erfinder: Detzner, Peter, 58089 Hagen (DE); Neuhaus, Dr.-Ing. Stefan, 44287 Dortmund (DE)

(56) Entgegenhaltungen:
- WO-A1-2012/010109
- DE-A1-102009 016 918
- DE-A1-102010 032 761
- US-A1- 2009 271 004

## Beschreibung

Die Erfindung betrifft ein Verfahren zum Betreiben einer Gebäudeinstallation mit einem Situationswächter, umfassend einen seinen Überwachungsbereich mehrdimensional erfassenden Sensor sowie eine zum Auswerten der Sensordaten dienende Steuereinheit, durch welche Steuereinheit zumindest ein Aktor einer gebäudetechnischen Installation angesteuert werden kann, wobei die nutzerseitige Ansteuerung des zumindest einen Aktors durch Gestenansteuerung erfolgt. Ferner betrifft die Erfindung eine Gebäudeinstallation mit einem Situationswächter und zumindest einem von diesem ansteuerbaren Aktor.

Gebäudetechnische Installationssysteme können eine Vielzahl von unterschiedlichen Aktoren umfassen. Aktoren im Rahmen dieser Ausführungen sind jedwede von einer Steuereinheit ansteuerbare Bestandteile eines Gebäudeinstallationssystems. Somit handelt es sich hierbei beispielsweise auch um Schnittstellen, etwa Kommunikationsschnittstellen neben den üblichen Aktoren wie Raumbeleuchtung, Beschattungseinrichtungen oder dergleichen. Gebäudeinstallationen, wie beispielsweise eine Raumbeleuchtung, eine Beschattungseinrichtung oder dergleichen werden in vielen Fällen situationsabhängig angesteuert. Bei einer Beschattungseinrichtung, wie beispielsweise einer Jalousieeinrichtung, kann diese in Abhängigkeit vom einfallenden Sonnenlicht eingerichtet werden. Zum Ansteuern einer Raumbeleuchtung werden Präsenzmelder eingesetzt, die die Raumbeleuchtung und somit die eine oder die mehreren Leuchten als Aktor bzw. Aktoren ansteuert, wenn die Präsenz einer oder mehrerer Personen in dem Raum, etwa beim Eintreten detektiert wird. Neben Situationswächtern, wie vorbeschrieben, werden auch solche eingesetzt, mit denen der Überwachungsbereich zweidimensional erfasst wird. Mit solchen Situationswächtern ist eine ortsaufgelöste Erfassung innerhalb des Überwachungsbereiches möglich. Die Auflösung in der Erfassung des Überwachungsbereiches ist von dem Auflösungsvermögen des dem Situationswächter zugehörigen Sensors abhängig. Bei einem Situationswächter mit ortsaufgelöster Erfassung seines Überwachungsbereiches ist der Sensor in aller Regel als Flächensensor ausgelegt. Bei diesem kann es sich beispielsweise um einen Kamerasensor handeln. Derartige Situationswächter erlauben ein detailliertes Erfassen des diesem zugeordneten Überwachungsbereiches.

Aus DE 10 2011 102 038 A1 ist ein Verfahren zum Steuern einer Einrichtung eines Heimautomatisierungssteuerungssystems bekannt, mit dem eine Gestenansteuerung von an diesem System beteiligten Aktoren möglich ist. Zu diesem Zweck verfügt dieses System über Speichermittel, in denen im Zusammenhang mit der Einrichtung einstudierte Gesten, mit denen ein bestimmter Aktor angesteuert werden soll, abgelegt sind. Des Weiteren ist es bei diesem vorbekannten System notwendig, virtuelle Sensoren in, an oder auf einer Raumbegrenzungsfläche zu definieren. Ein solcher virtueller Sensor kann beispielsweise ein markiertes Feld auf einer Raumwand sein. Mithin fungiert dieser virtuelle Sensor nach Art eines herkömmlichen Displays zur Definition des Bereiches des Raumes, in dem eine Ansteuergeste auszuüben ist. Erfasst wird eine solche Geste von einem Erfassungsmittel, wobei zumindest zwei Kamerasensoren als Erfassungsmittel vorgeschlagen werden, um einen Raum in Bezug auf eine Gestenerkennung überwachen zu können. Insofern ist es bei diesem vorbekannten System und dem zum Betrieb dieses Systems eingesetzten Verfahren erforderlich, die zur Ansteuerung vorgesehenen Gesten einzulernen sowie zumindest einen virtuellen Sensor in einem Raum zu definieren. Um dieses System mit Gestenansteuerung bedienen zu können, ist es für einen Nutzer erforderlich, die zuvor definierten Gesten, die u.a. als Wischgesten angesprochen sind, zu kennen bzw. selbst einzulernen.

Zudem ist durch die WO 2012/010109 A1 ein System und Verfahren zum Verarbeiten von visueller, auditiver, olfaktorischer und/oder haptischer Information für das kognitive Bestimmen wenigstens eines Zustandes mindestens eines Raumes und/oder mindestens einer Person und/oder mindestens eines Gegenstandes bekannt geworden. Es wird zum Finden und Umsetzen einer Entscheidung für den zumindest einen Raum eine zwei- oder dreidimensionale Karte zur Verfügung gestellt, welche eine oder mehrere statische Zonen aufweist, wobei jede statistische Zone ein Gebiet des Raumes kennzeichnet, aus dem visuelle, auditive, olfaktorische und/oder haptische Information über den Zustand des Raumes, einer Person und/oder eines Gegenstandes zu erlangen ist, und, sobald die Anwesenheit einer oder mehrerer Personen in dem Raum signalisiert wird, für zumindest eine dieser Personen eine dynamische Zone definiert wird, aus welcher Bewegungsinformation von der oder über die Person zu erlangen ist, wobei zum Erkennen des Zustandes an visueller Information nur solche verwendet wird, die aus einer der Zonen herrührt.

Ausgehend von diesem diskutierten Stand der Technik liegt der Erfindung daher die Aufgabe zugrunde, ein Verfahren zum Betreiben einer Gebäudeinstallation mit einem Situationswächter zum Ansteuern zumindest eines gebäudetechnischen Aktors durch eine Geste sowie eine Gebäudeinstallation dergestalt weiterzubilden, damit nicht nur eine Systemeinrichtung vereinfacht, sondern auch eine Benutzung desselben intuitiv möglich ist.

Gelöst wird diese Aufgabe erfindungsgemäß durch ein eingangs genanntes, gattungsgemäßes Verfahren, bei dem zur Ansteuerung eines Aktors die von dem Situationswächter erfassten Daten im Hinblick auf das Vorhandensein einer Zeigegeste ausgewertet werden, bei dem bei der Systemeinrichtung zumindest ein durch eine Zeigegeste ansteuerbarer Aktor in dem Koordinatensystem der von dem Sensor erfassten Daten durch einen den Aktor einfassenden bzw. einen solchen virtuell darstellenden Hüllkörper definiert wird und bei dem eine systemseitige Ansteuerung dieses Aktors erfolgt, wenn nutzerseitig mit einer vordefinierten Zeigegeste auf den Hüllkörper gezeigt wird.

Bei diesem Verfahren - entsprechendes gilt für die beanspruchte Gebäudeinstallation - wird eine Zeigegeste verwendet, um einen Aktor anzusteuern. Bei einer Gestenansteuerung mittels einer Zeigegeste ist es nicht erforderlich, eine solche systemseitig einlernen zu müssen. Eine Zeigegeste beinhaltet eine Richtungsinformation. Diese wird genutzt, um einen Aktoransteuerungswunsch zu erkennen. Systemseitig ist die Raumlage des oder der anzusteuernden Aktoren innerhalb des Koordinatensystems des Sensors bzw. des dem Sensor zugeordneten Bereiches, beispielsweise eines Raumes bekannt. Somit erfolgt zugleich mit der Zeigegeste und deren Richtungsauswertung eine Auswahl desjenigen Aktors, der durch die Zeigegeste angesteuert werden soll. Dieses gelingt in einfacher Weise dadurch, dass mit einer Zeigegeste auf den anzusteuernden Aktor oder auf das anzusteuernde Gewerk gezeigt wird. Im letzteren Fall stellt der Hüllkörper einen virtuellen Aktor dar. Ein solcher virtueller Aktor kann letztendlich an beliebiger Stelle im Raum vorgesehen sein, das heißt, dieser muss nicht unbedingt in einer bestimmten Anordnung zu dem anzusteuernden Aktor oder dem anzusteuernden Gewerk liegen. Das Zeigen auf denjenigen Aktor/virtuellen Aktor, der nutzerseitig angesteuert werden soll, wird als besonders intuitiv angesehen.

Das Auswerten einer Zeigegeste, beispielsweise eines ausgestreckten Armes eines Nutzers ist ohne Weiteres möglich. Beispielsweise kann ein Richtungsvektor bestimmt bzw. berechnet werden, der die Zeigerichtung der Zeigegeste definiert. Die Zielobjekte, auf die bei einer gewünschten Ansteuerung die Zeigegeste gerichtet werden muss, um eine Ansteuerung zu bewirken, sind nicht lediglich die Aktoren in ihrer körperlichen bzw. geometrischen Erstreckung, sondern jeweils ein einen solchen Aktor/virtuellen Aktor einfassender Hüllkörper. Auf diese Weise wird vor allem bei feingliedrigen Aktoren, wie dieses etwa bei einer Stehlampe der Fall ist, Sorge dafür getragen, dass durch eine Zeigegeste der nutzerseitige Ansteuerwunsch des Aktors, also beispielsweise einer Stehlampe auch dann erkannt wird, wenn der sich aus der Zeigegeste berechnende Richtungsvektor nicht auf den Aktor selbst trifft, was beispielsweise bei einer Stehlampe bezüglich des Ständers wohl nur eher zufällig der Fall wäre. Der Hüllkörper eines solchen Aktors ist typischerweise eine einfache geometrische Figur, beispielsweise ein Quader, ein Zylinder oder dergleichen. Somit wird eine Zeigegeste als Ansteuerwunsch des Aktors/virtuellen Aktors ausgewertet, wenn der Richtungsvektor der Zeigegeste auf den Hüllkörper des trifft. Von Vorteil bei diesem Konzept ist nicht nur, dass aufgrund der Entfernung in einem Raum zwischen der die Zeigegeste ausübenden Person und dem möglichen Zielobjekt eine höhere Ansteuersicherheit gegeben ist, sondern dass einfache geometrische Körper als Hüllkörper bereits durch wenige Koordinaten definiert werden können und somit eine Auswertung dahingehend, ob der berechnete Richtungsvektor der Zeigegeste auf den Hüllkörper trifft oder nicht auch mit relativ geringen Rechenressourcen möglich ist. Als Hüllkörper ist z.B. ein solcher Körper zu verstehen, der als einfacher geometrischer Körper sich aus den Maximalerstreckungen des Aktors in den Dimensionen des Sensors ergibt. Je nachdem, ob durch den Situationswächter zwei- oder dreidimensionale Daten bereitgestellt werden können, wird entsprechend diesen Dimensionen der Hüllkörper definiert.

Der einen Aktor einschließende virtuelle Hüllkörper ist vorzugsweise in zumindest einer seiner Dimensionen, zweckmäßigerweise jedoch in allen seinen Dimensionen größer als die jeweilige Dimension des Aktors selbst. Den Hüllkörper wird man um den Aktor dergestalt legen, dass sich der Aktor typischerweise darin in einer zentrierten Anordnung befindet. Durchaus möglich ist es, mehrere Aktoren, insbesondere gleichartige Aktoren in einen gemeinsamen Hüllkörper einzufassen. Insofern ist bei einer solchen Ausgestaltung des Verfahrens der Hüllkörper jedes einzelnen Aktors mit dem benachbarten Hüllkörper verschmolzen, so dass im Ergebnis ein für die diesbezüglichen Aktoren gemeinsamer Hüllkörper definiert wird. Sind in einem Raum mehrere Deckenleuchten vorhanden, kann es sich anbieten, einzelne oder auch alle Deckenleuchten miteinander in einem Hüllkörper zusammenzufassen. Angesteuert werden dann die durch einen Hüllkörper zusammengefassten Aktoren, wenn eine Zeigegeste auf diesen Hüllkörper gerichtet ist.

Bei dem von dem Hüllkörper eingefassten Aktor kann es sich, wie dieses vorstehend beschrieben ist, um den tatsächlichen Aktor, beispielsweise eine Leuchte handeln. Durch die beschriebene Gestenansteuerung können auch Aktoren angesteuert werden, die nutzerseitig in einem Raum nicht sichtbar sind, wie beispielsweise eine Ansteuerung für eine Jalousie- oder Rollladeneinrichtung. In einem solchen Fall fasst der Hüllkörper einen virtuellen Aktor ein, so dass eine auf diesen Hüllkörper gerichtete Zeigegeste zum Ansteuern dieses virtuellen Aktors zum Betätigen der Jalousie- oder Rollladeneinrichtung führt. Ähnliches gilt bei einer Ansteuerung einer Heizung als Aktor, wenn ein Heizkörper im Raum nicht sichtbar ist.

Die räumliche Anordnung des oder der Aktoren, wenn diese im Überwachungsbereich des Sensors angeordnet sind, kann unmittelbar von dem Sensor selbst erfasst werden. Durchführen lässt sich das Verfahren jedoch auch, wenn Aktoren sich nicht im Erfassungsbereich des Sensors befinden. Schließlich kann koordinatenmäßig der gesamte Raum oder auch ein Teilbereich desselben außerhalb des eigentlichen Überwachungsbereiches des Sensors koordinatenmäßig definiert werden.

Schließlich braucht zum Ansteuern eines Aktors nur die Zeigegeste von dem Sensor erfasst zu werden, um die gewünschte Richtungsinformation daraus ableiten zu können.

Um Gesten, die der Ansteuerung eines Aktors dienen, von zufällig gleichartigen Gesten eines im Überwachungsbereich des Situationswächters befindlichen Nutzers voneinander unterscheiden zu können und somit eine Ansteuerung des oder der Aktoren nur dann vorzunehmen, wenn mit hoher Wahrscheinlichkeit eine solche auch tatsächlich gewünscht wird, ist in einer Weiterbildung des Verfahrens vorgesehen, dass eine Ansteuerung erst erfolgt, wenn die erfasst Zeigegeste zumindest eine Verifizierungsbedingung erfüllt haben muss. Um den Rechenaufwand zu reduzieren, wird man eine Richtungsauswertung einer Zeigegeste typischerweise erst dann vornehmen, nachdem eine Ansteuerverifizierung stattgefunden hat. Eine solche Verifizierung kann beispielsweise zeitabhängig vorgenommen werden. Dieses bedeutet, dass die Zeigegeste für eine bestimmte Mindestzeitspanne beibehalten werden muss, um als solche erkannt und weiter ausgewertet zu werden. So ist in einem Ausführungsbeispiel vorgesehen, dass eine Zeigegeste für zumindest zwei Sekunden aufrechterhalten werden muss, um als solche erkannt zu werden. Anstelle oder auch zusätzlich können auch andere Verifizierungsbedingungen genutzt werden, beispielsweise eine bewegungsfrequenzabhängige Auswertung der erfassten Zeigegeste. Auch andere geeignete Verifizierungsbedingungen sind möglich.

Angesteuert werden können durch eine solche Zeigegeste Aktoren unterschiedlicher gebäudetechnischer Installationen wie Beleuchtung, Jalousien, Rollladen und/oder Heizung/Lüftung ebenso wie andere Systeme, wie beispielsweise Audio-, Video- und/oder Fernsehsysteme. Wenn Fenster elektromotorisch geöffnet und geschlossen werden können, ist auch eine Ansteuerung der diesbezüglichen Aktoren möglich. Aktor und Hüllkörper können sich - wie bereits vorstehend aufgezeigt - daher auch an unterschiedlichen Stellen im Raum befinden. Entscheidend ist, dass ein Hüllkörper, der beispielsweise ein gebäudetechnisches Gewerk umspannt oder zumindest einem solchen in anderer Weise zugeordnet ist, mit den diesem Gewerk zugehörigen Aktoren assoziiert ist.

Der Sensor des Situationswächters weist zumindest eine zweidimensionale Auflösung auf. Vorteilhaft ist jedoch, wenn dieser eine dreidimensionale Auflösung aufweist, so dass eine eindeutige Richtungszuordnung in derselben horizontalen Richtung befindlichen Aktoren durch ihre Höhenunterscheidung möglich ist.

Neben einem Ansteuern zum Ein- und Ausschalten eines solchen Aktors besteht auch die Möglichkeit, den Aktor mit einer bestimmten Dimmroutine anzusteuern. Im Falle einer Leuchtenansteuerung kann eine solche Dimmroutine beispielsweise derart ausgelegt sein, dass im Zuge der Ansteuerung ein zyklisches Heller- und Dunklerwerden durchlaufen wird. Gemäß einem Ausführungsbeispiel wird diese beendet, wenn die Geste nicht mehr erfasst wird, also: beispielsweise der ausgestreckte Arm nicht mehr ausgestreckt ist oder seine Richtung geändert hat. Je nach dem Auflösungsvermögen des Sensors des Situationswächters können Aktoren auch durch aufeinander folgende Gesten angesteuert werden.

Bei der vorbeschriebenen Ansteuerung, bei der durch die Zeigegeste ein Aktor nicht lediglich ein- oder ausgeschaltet wird, dient die erste Zeigegeste dem Zweck, den Situationswächter in einen Ansteuermodus zu bringen, mithin diesem mitzuteilen, dass eine weitergehende Ansteuerung des in Rede stehenden Aktors folgt. Bei dem vorbeschriebenen Ausführungsbeispiel ist diese Ansteuerung durch Durchlaufen der vorgegebenen Dimmroutine systemseitig hinterlegt. In einer anderen Ausgestaltung ist vorgesehen, dass nach Erfassen einer Zeigegeste systemseitig abgewartet wird, ob ein oder mehrere weitere, einer Ansteuerung dienende Gesten folgen, beispielsweise eine eine Dimmroutine beeinflussende Bewegung der Zeigegeste. Bei einer solchen nachfolgenden Geste kann es sich auch um eine andere Geste handeln, mit der auch andere Maßnahmen vorgenommen werden können, als lediglich einen Aktor bezüglich seiner Ansteuerung, also beispielsweise bei einer Leuchte bezüglich ihrer Dimmroutine zu beeinflussen. Etwa bei einer Unterteilung des Überwachungsbereiches des Situationswächters in mehrere Überwachungsbereiche kann bei Vorsehen unterschiedlicher Beleuchtungsansteuerungen für den jeweiligen Teilbereich etwa eine Gestenansteuerung realisiert werden, bei der die Beleuchtungseinstellung in einem Teilüberwachungsbereich auf den oder die anderen Teilüberwachungsbereiche übertragen wird. Hierfür eignet sich beispielsweise eine so genannte Grab-and-Drop-Geste. Mit einer solchen Maßnahme können ohne Weiteres unabhängig voneinander ansteuerbare Aktoren mit ein und demselben Einstellwert angesteuert werden. Dieses bietet sich vor allem bei einer Raumbeleuchtung an. Die Folge ist, dass sodann alle unabhängig ansteuerbaren Leuchten oder Leuchtengruppen ohne Weiteres in denselben Dimmstatus gebracht werden können.

Wird ein dreidimensionaler Sensor zur Ausbildung des Situationswächters eingesetzt, ist eine Auswertung der Richtung einer Geste nicht nur in der Erfassungsebene, sondern auch in der Tiefe möglich. Eine Identifizierung von mit einer solchen Geste angesprochener Aktoren ist eindeutig, was bei einer zweidimensionalen Auslegung des Sensors nur dann der Fall ist, wenn in einer bestimmten Richtung auch tatsächlich nur ein Aktor vorgesehen ist.

Dreidimensionale Sensoren lassen sich beispielsweise durch einen Stereokamerasensor mit zwei einzelnen, mit Abstand zueinander angeordneten Sensoren realisieren. Bevorzugt wird jedoch eine Ausgestaltung, bei der nur ein Flächensensor benötigt wird. Möglich ist dieses beispielsweise mit einem Infrarotsensor mit einer Gruppe von IR-Licht emittierenden LEDs sowie einem zweidimensionalen Array IR-empfindlicher optoelektronischer Wandlerelemente. Dann kann die Tiefeninformation über die Laufzeit von der oder den lichtabgebenden Dioden zu dem Sensorarray gewonnen werden. Diese Auswertung wird allgemein als Time-of-Flight-Auswertung bezeichnet. Auch andere Konzepte lassen sich verwirklichen, wie beispielsweise auch das Prinzip von "Structured Light".

Die Steuereinheit kann, wie dieses bei einem Ausführungsbeispiel vorgesehen ist, Teil des Situationswächters sein. Durchaus besteht auch die Möglichkeit, den Situationswächter dergestalt auszuführen, dass die Steuereinheit oder ein Teil derselben räumlich von dem Sensor getrennt ist, insbesondere dann, wenn der Situationswächter an einen Installationsbus angeschlossen ist. Bevorzugt ist eine Ausgestaltung, bei der eine als Teil der Steuereinheit anzusehende Auswerteeinheit zum Auswerten der Sensordaten zusammen mit dem Sensor in einem Situationswächter vereint ist und die eigentliche Ansteuereinheit beispielsweise eine zentrale Steuereinrichtung für gebäudetechnische Installationen ist. Die Ansteuerdaten erhält eine solche zentrale Ansteuereinheit von der Auswerteeinheit. Hierdurch wird die Kommunikation über den Installationsbus reduziert.

Nachfolgend ist die Erfindung anhand eines Ausführungsbeispiels unter Bezugnahme auf die beigefügten Figuren beschrieben. Es zeigen:
- **Fig. 1:**: eine schematisierte Darstellung eines in einem Gebäude befindlichen Raumes mit einer einen Situationswächter umfassenden Gebäudeinstallation und
- **Fig. 2:**: eine schematisierte Darstellung des Raumes der Figur 1 mit einer darin befindlichen Person.

In einem Raum 1 eines nicht näher dargestellten Gebäudes ist eine Beleuchtungseinrichtung als Gebäudeinstallation installiert. Die Beleuchtungseinrichtung umfasst vier Deckenleuchten L₁ bis L₄. Die Deckenleuchten L₁ bis L₄ sind in zwei Leuchtengruppen LG₁, LG₂ unterteilt. Eine erste Leuchtengruppe LG₁ wird durch die Leuchten L₁ und L₂ gebildet. Eine zweite Leuchtengruppe LG₂ wird durch die Leuchten L₃ und L₄ bereitgestellt. Die Leuchten L₁ bis L₄ sind an einem Installationsbus 2 angeschlossen. Bei dem dargestellten Ausführungsbeispiel ist der Installationsbus 2 nicht auf die Leuchten L₁ bis L₄ und die weiteren, noch zu beschreibenden Komponenten beschränkt, sondern Teil eines sich durch das gesamte Gebäude ziehenden Bussystems. Der Beleuchtungseinrichtung als Gebäudeinstallation ist neben den Leuchten L₁ bis L₄ ein Situationswächter 3 zugeordnet. Über den Situationswächter 3 werden die Leuchten L₁ bis L₄ angesteuert. Bei dem dargestellten Ausführungsbeispiel ist vorgesehen, dass jeweils die Leuchten L₁, L₂ der Leuchtengruppe LG₁ und die Leuchten L₃, L₄ der Leuchtengruppe LG₂ gemeinsam angesteuert werden, weshalb diese zu einer Gruppe zusammengefasst sind. Der Situationswächter 3 umfasst einen Sensor 4 und eine Steuereinheit 5. Die Steuereinheit 5 wertet die über den Sensor 4 gewonnenen Daten aus und steuert in Abhängigkeit von dem Auswertergebnis die Leuchtengruppen LG₁, LG₂ an. Bei dem Sensor 4 handelt es sich um einen Infrarotflächensensor, der wiederum über ein IR-Diodenarray und über einen in einzelne optoelektrische Wandlerelemente (Pixel) unterteilten Flächensensor verfügt. Der Sensor 4 wird über die Steuereinheit 5 angesteuert. Betrieben werden kann der Sensor 4 als 3D-Sensor, und zwar durch Auswerten der von einem ausgesendeten IR-Puls benötigten Zeit, bis dieser von einem oder mehreren Pixeln des Sensorarrays erfasst wird, wenn dieser von einem im Überwachungsbereich 6 befindlichen Gegenstand reflektiert wird. Die Laufzeit ist proportional zur zurückgelegten Strecke des IR-Pulses und beinhaltet daher eine Entfernungsinformation. Mit dem Sensor 4 lässt sich der Überwachungsbereich 6 dreidimensional und somit nach Art einer Tiefenkarte erfassen.

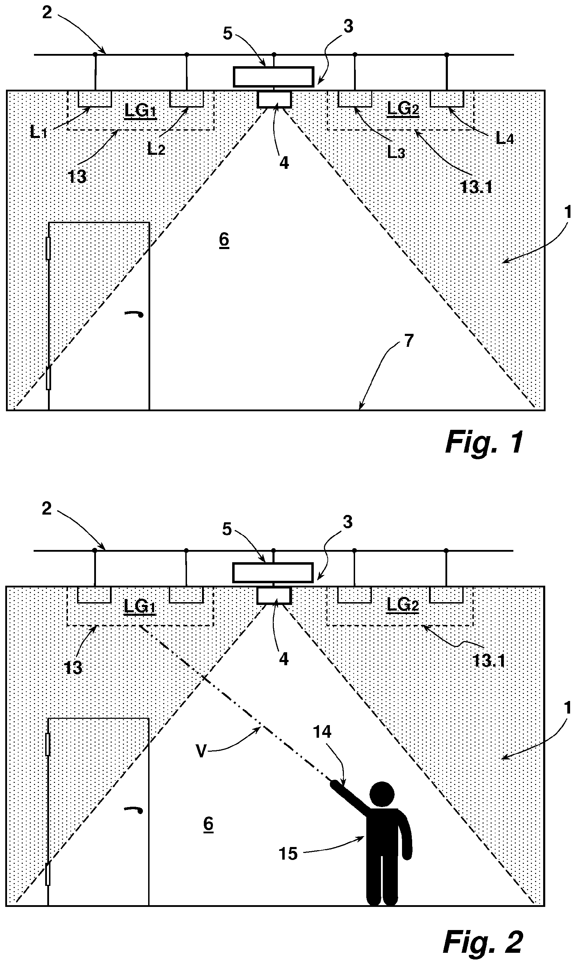

Für eine Ansteuerung der Leuchten L₁ bis L₄ bzw. der beiden Leuchtengruppen LG₁ und LG₂ wird die Raumlage derselben benötigt, da mittels des Situationswächters 3 eine Gestenansteuerung mittels einer Zeigegeste jeder Leuchtengruppe LG₁, LG₂ vorgesehen ist. Ausgenutzt wird hierbei die durch den Situationswächter 3 mögliche Tiefenerfassung von Objekten im Überwachungsbereich 6. Die Gestenansteuerung ist dergestalt vorgesehen (siehe Figur 2), dass der ausgestreckte Arm 14 einer in dem Überwachungsbereich 6 befindlichen Person 15 zumindest über eine vordefinierte Zeitspanne (beispielsweise 2 oder 3 Sekunden) auf eine der beiden Leuchtengruppen LG₁, LG₂ gerichtet wird, damit dies zu einer Ansteuerung derselben führt. Ausgewertet wird die durch die von dem Situationswächter 3 des erfassten, ausgestreckten Arms 14 der Person 15 beschriebene Richtung nach Art eines Vektors V. Trifft der Richtungsvektor V auf einen der beiden Leuchtengruppen LG₁, LG₂, wird dieses als Ansteuerwunsch systemseitig verstanden. In dem in Figur 2 gezeigten Beispiel wird eine Ansteuerung der Leuchtengruppe LG₁ gewünscht. Daher ist der ausgestreckte Arm 14 in diese Richtung gerichtet. Da in aller Regel mit einem ausgestreckten Arm exakt eine der Leuchten einer Leuchtengruppe wohl nicht in der verlängerten Richtung des ausgestreckten Arm als Zeigegeste getroffen werden wird, ist vorgesehen, die beiden Leuchtengruppen LG₁, LG₂ durch jeweils einen Hüllkörper virtuell einzufassen und zu vergrößern. Die Hüllkörper sind in Figur 1 mit den Bezugszeichen 13, 13.1 kenntlich gemacht. Hierbei handelt es sich um virtuell berechnete Quader und somit um geometrisch einfache Körper, die die jeweiligen Leuchten L₁, L₂ bzw. L₃, L₄ einer Leuchtengruppe LG₁, LG₂ einfassen. Die Quader sind in ihrer Breitenerstreckung, in ihrer Längserstreckung sowie in ihrer Höhenerstreckung größer als der tatsächlich von den beiden Leuchten einer Leuchtengruppe LG₁, LG₂ eingenommene Raum (siehe Figur 1). Bei dem dargestellten Ausführungsbeispiel sind die Leuchten L₁, L₂ bzw. L₃, L₄ in dem jeweiligen Hüllkörper 13, 13.1 in den Koordinatenrichtungen x und y mittig angeordnet. In z-Richtung braucht sich der jeweilige Hüllkörper 13, 13.1 nicht über die Decke hinaus zu erstrecken, weshalb die Decke die oberseitige Begrenzung des jeweiligen Hüllkörpers 13, 13.1 bildet. Bei der Berechnung der Hüllkörper 13, 13.1 kann die Information einfließen, ob es sich bei den Leuchten um Deckenanbauleuchten bzw. Deckeneinbauleuchten oder um Pendelleuchten handelt. Bei dem in Figur 4 dargestellten Ausführungsbeispiel trifft der über den ausgestreckten Arm 14 berechnete Vektor V auf den Hüllkörper 13.

Es versteht sich, dass bei Erfassen einer Person, die mit beiden Armen ausgestreckt auf beide Leuchtengruppen LG₁, LG₂ zeigt, gleichzeitig beide Leuchtengruppen LG₁, LG₂ angesteuert werden.

Damit eine Richtungsauswertung eines ausgestreckten Armes vorgenommen werden kann, werden in einem vorangehenden Auswerteschritt von dem Sensor 4 gesammelten Daten im Hinblick auf das Vorhandensein einer durch den ausgestreckten Arm gebildeten Zeigegeste untersucht. Dieses erfolgt typischerweise durch einen Mustervergleich, wobei nicht nur der Arm, sondern auch der übrige Körper der Person als körperliche Basis für den Ausgangspunkt des Armes Teil der Mustererkennung sein kann.

Um ungünstige Betrachtungswinkel des Sensors 4 in Bezug auf die gewünschte Gestenansteuerung zu vermeiden, wird man den Sensor 4 vorzugsweise mit entsprechendem Abstand zu dem ihm nächstliegenden Aktor oder der ihm nächstliegenden Aktorgruppe anordnen, wenn sich diese an derselben Raumbegrenzung befinden, wie der Sensor.

Eine solche Leuchtenansteuerung kann ein simples Ein- und Ausschalten der jeweiligen Leuchtengruppe LG₁, LG₂ zur Folge haben, ausgehend jeweils von dem aktuellen Zustand. Durchaus möglich ist auch, dass das Halten des ausgestreckten Armes nach Erfassen des Ansteuerwunsches einen Dimmzyklus auslöst, gemäß dem die Leuchten einer Leuchtengruppe LG₁, LG₂ zyklisch ausgehend von der aktuellen Stellung hoch und runter gedimmt werden. Wird der Arm der ansteuernden Person wieder abgesenkt, endet der Dimmzyklus mit dem dann aktuell eingestellten Wert. Die vorbeschriebene Leuchtenansteuerung ist beispielhaft zu verstehen. Gemäß einer anderen Ausgestaltung ist vorgesehen, dass der Arm nach Art eines Zeigers in die eine oder andere Richtung bewegt wird, und die Armbewegung den Dimmvorgang definiert. Aufgrund der Ausgestaltung des Sensors mit seiner Flächen- und Tiefenerfassung kann sowohl eine Ansteuerungsänderung durch Heben und Senken des Armes als auch durch Schwenken des Armes erfolgen. Auch eine kombinierte Armbewegung ist aufgrund der 3D-Erfassung des Überwachungsbereiches zur Programmierung bzw. Ansteuerung des Situationswächters möglich. Bei der Leuchtengruppe LG₁ können beispielsweise durch Heben und Senken des ausgestreckten Armes die Leuchten L₁, L₂, der Leuchtengruppe LG₁ gleichermaßen gedimmt werden. Ein Schwenken des Armes führt zu einer unterschiedlichen Ansteuerung der Leuchten L₁, L₂ dieser Leuchtengruppe LG₁.

### Bezugszeichenliste

- 1: Raum
- 2: Installationsbus
- 3: Situationswächter
- 4: Sensor
- 5: Steuereinheit
- 6: Überwachungsbereich
- 7: Boden
- 13, 13.1: Hüllkörper
- 14: Arm
- 15: Person

- L₁ bis L₄: Leuchte
- LG₁, LG₂: Leuchtengruppe

## Patentansprüche

1. Verfahren zum Betreiben einer Gebäudeinstallation mit einem Situationswächter (3), umfassend einen seinen Überwachungsbereich (6) mehrdimensional erfassenden Sensor (4) sowie eine zum Auswerten der Sensordaten dienende Steuereinheit (5), durch welche Steuereinheit (5) zumindest ein Aktor (L₁ bis L₄) einer gebäudetechnischen Installation angesteuert werden kann, wobei die nutzerseitige Ansteuerung des zumindest einen Aktors (L₁ bis L₄) durch Gestenansteuerung erfolgt, **dadurch gekennzeichnet, dass** zur Ansteuerung eines Aktors (L₁ bis L₄) die von dem Situationswächter (3) erfassten Daten im Hinblick auf das Vorhandensein einer Zeigegeste ausgewertet werden, wobei die beinhaltete Richtungsinformation der Zeigegeste genutzt wird, um einen Aktoransteuerungswunsch zu erkennen, dass bei der Systemeinrichtung zumindest ein durch eine Zeigegeste ansteuerbarer Aktor (L₁ bis L₄) in dem Koordinatensystem der von dem Sensor (4) erfassten Daten durch einen den Aktor (L₁ bis L₄) einfassenden bzw. einen solchen virtuell darstellenden Hüllkörper (13, 13.1) definiert wird, und dass eine systemseitige Ansteuerung dieses Aktors (L₁ bis L₄) erfolgt, wenn nutzerseitig mit einer vordefinierten Zeigegeste auf den Hüllkörper (13, 13.1) gezeigt wird, wozu die Zeigegeste eine Richtungsinformation beinhaltet, der Sensor (4) die gewünschte Richtungsinformation aus der erfassten Zeigegeste ableitet und der Vektor (V) der Zeigerichtung berechnet wird, um zu prüfen, ob er auf einen definierten Hüllkörper (13, 13.1) trifft.

2. Verfahren nach Anspruch 1, **dadurch gekennzeichnet, dass** der Hüllkörper (13, 13.1) in zumindest einer seiner Dimensionen größer definiert wird als der davon eingefasste Aktor in derselben Dimension.

3. Verfahren nach Anspruch 2, **dadurch gekennzeichnet, dass** der Hüllkörper (13, 13.1) in allen Dimensionen größer definiert wird als die entsprechenden Dimensionen des Aktors (L₁ bis L₄) sind und der Hüllkörper (13, 13.1) bezüglich des Aktors (L₁ bis L₄) ausgerichtet wird, damit der Aktor (L₁ bis L₄) zumindest in Bezug auf zwei Dimensionen zentriert in dem Hüllkörper (13, 13.1) angeordnet ist.

4. Verfahren nach einem der Ansprüche 1 bis 3, **dadurch gekennzeichnet, dass** in einem Hüllkörper (13, 13.1) mehrere, insbesondere gleichartige Aktoren (L₁, L₂ bzw. L₃, L₄) zusammengefasst werden.

5. Verfahren nach einem der Ansprüche 1 bis 4, **dadurch gekennzeichnet, dass** zumindest ein zur Darstellung eines virtuellen Aktors vorgesehener Hüllkörper definiert wird, der räumlich von dem eigentlichen Aktor getrennt ist.

6. Verfahren nach einem der Ansprüche 1 bis 5, **dadurch gekennzeichnet, dass** als Zeigegeste ein zumindest weitgehend ausgestreckter Arm (14) eines Nutzers (15) definiert wird.

7. Verfahren nach einem der Ansprüche 1 bis 6, **dadurch gekennzeichnet, dass** zum Unterscheiden einer zum Ansteuern eines Aktors (L₁ bis L₄) ausgeführten Zeigegeste von einer zufälligen gleichartigen Bewegung die Zeigegeste zumindest eine Verifizierungsbedingung erfüllen muss, um als solche identifiziert zu werden.

8. Verfahren nach Anspruch 7, **dadurch gekennzeichnet, dass** eine Verifizierungsbedingung eine zeitabhängige und/oder bewegungsfrequenzabhängige Auswertung einer erfassten potenziellen Zeigegeste beinhaltet, die als solche ausgewertet wird, wenn die zumindest eine Verifizierungsbedingung erfüllt ist.

9. Verfahren nach einem der Ansprüche 1 bis 8, **dadurch gekennzeichnet, dass** bei einem Betrieb der Gebäudeinstallation mit Zeigegestenansteuerung nach ihrer Einrichtung und nach Erfassen einer Zeigegeste zur Bestimmung der Zeigerichtung in dem Koordinatensystem des Sensors (4) der Vektor (V) der Zeigerichtung bestimmt wird.

10. Verfahren nach einem der Ansprüche 1 bis 9, **dadurch gekennzeichnet, dass** einer ersten Zeigegeste eine nachfolgende Geste zur weiteren Ansteuerung des durch die Zeigegeste angesteuerten Aktors zur weiteren Ansteuerung desselben folgt.

11. Verfahren nach einem der Ansprüche 1 bis 10, **dadurch gekennzeichnet, dass** der Sensor (4) seinen Überwachungsbereich (6) in einer dreidimensionalen Auflösung erfasst.

12. Verfahren nach einem der Ansprüche 1 bis 11, **dadurch gekennzeichnet, dass** durch eine Zeigegeste ein oder mehrere Aktoren folgender gebäudetechnischer Installationen angesteuert werden können: Beleuchtung, Jalousien, Rollladen und/oder Heizung/Lüftung.

13. Gebäudeinstallation mit einem Situationswächter (3) zur Durchführung des Verfahrens nach einem der Ansprüche 1 bis 12, umfassend einen seinen Überwachungsbereich (6) mehrdimensional erfassenden Sensor (4) sowie einer zum Auswerten der Sensordaten dienenden Steuereinheit (5) und mit wenigstens einem durch die Steuereinheit (5) des Situationswächters (3) ansteuerbaren Aktor (L₁ bis L₄), welcher Steuereinheit (5) eine Speichereinheit zugeordnet ist oder die Steuereinheit eine Speichereinheit umfasst, in der eine vordefinierte Zeigegeste als Muster und die Koordinaten von jeweils zumindest einen Aktor einfassenden bzw. einen solchen virtuell darstellenden Hüllkörper hinterlegt sind.

14. Gebäudeinstallation nach Anspruch 13, **dadurch gekennzeichnet, dass** mehrere Aktoren (L₁ bis L₄) durch die Steuereinheit (5) situationsabhängig, unabhängig voneinander ansteuerbar sind und zur Kommunikation zwischen der Steuereinheit (5) und den Aktoren (L₁ bis L₄) ein Kommunikationsmedium, etwa ein Datenbus (2) vorgesehen ist.

15. Gebäudeinstallation nach Anspruch 13 oder 14, **dadurch gekennzeichnet, dass** die Gebäudeinstallation an einen Installationsbus angeschlossen ist.

16. Gebäudeinstallation nach einem der Ansprüche 13 bis 14, **dadurch gekennzeichnet, dass** der Sensor (4) ein 3D-Sensor ist und betrieben wird, den Überwachungsbereich (6) orts- und tiefenaufgelöst zu erfassen.

17. Gebäudeinstallation nach Anspruch 16, **dadurch gekennzeichnet, dass** der Sensor (4) ein optischer Sensor, insbesondere ein Infrarotsensor ist und die Abstandsermittlung durch eine Time-of-Flight-Erfassung erfolgt.

## Claims

1. Process for operation of a building installation system with a situation detector (3), comprising a sensor (4) scanning the detection range (6) multidimensionally as well as a control unit (5) for evaluation of the sensor data, by which control unit (5) at least one actuator (L₁ to L₄) of a building installation can be controlled, wherein the control of the at least one actuator (L₁ to L₄) by the user is effected by gesture control, **characterized by the fact** that for control of an actuator (L₁ to L₄) the data detected by the situation detector (3) are evaluated with regard to the presence of a pointing gesture, wherein the direction information contained in the pointing gesture is used to detect an actuator control request, that during the system setup at least one actuator (L₁ to L₄) which is to be controlled by a pointing gesture is defined in the coordinate system of the data detected by the sensor (4) by a bounding box (13, 13.1) framing respectively virtually depicting the actuator (L₁ to L₄), and that a control of this actuator (L₁ to L₄) by the system is effected if the user points at the bounding box (13, 13.1) with a pre-defined pointing gesture, to which effect the pointing gesture contains a direction information, the sensor (4) derives the desired direction information from the pointing gesture detected and the vector (V) of the pointing direction is calculated to check whether it hits a defined bounding box (13, 13.1).

2. Process in accordance with Claim 1, **characterized by the fact** that at least one of the dimensions of the bounding box (13, 13.1) is defined larger than the same dimension of the actuator framed by the bounding box.

3. Process in accordance with Claim 2, **characterized by the fact** that all dimensions of the bounding box (13, 13.1) are defined larger than the corresponding dimensions of the actuator (L₁ to L₄), and the bounding box (13, 13.1), with regard to the actuator (L₁ to L₄), is positioned in a way that the actuator (L₁ to L₄) is arranged centrally in the bounding box (13, 13.1) with regard to at least two dimensions.

4. Process in accordance with any of Claims 1 to 3, **characterized by the fact** that several, notably similar actuators (L₁, L₂ resp. L₃, L₄) are combined in one bounding box (13, 13.1).

5. Process in accordance with any of Claims 1 to 4, **characterized by the fact** that at least one bounding box for depiction of a virtual actuator is defined which is physically separated from the actuator itself.

6. Process in accordance with any of Claims 1 to 5, **characterized by the fact** that as pointing gesture an at least largely outstretched arm (14) of a user (15) is defined.

7. Process in accordance with any of Claims 1 to 6, **characterized by the fact** that to distinguish a pointing gesture made to control an actuator (L₁ to L₄) from a similar gesture made accidentally, the pointing gesture must fulfil at least one verification condition to be identified as such.

8. Process in accordance with Claim 7, **characterized by the fact** that a verification condition comprises a time-dependent and/or movement frequency-dependent evaluation of a detected potential pointing gesture which is evaluated as such if the at least one verification condition is fulfilled.

9. Process in accordance with any of Claims 1 to 8, **characterized by the fact** that during operation of the building installation with pointing gesture control, after set-up of the building installation and after detection of a pointing gesture, the vector (V) of the pointing direction is determined to define the pointing direction in the coordinate system of the sensor (4).

10. Process in accordance with any of Claims 1 to 9, **characterized by the fact** that a first pointing gesture is followed by another gesture for further control of the actuator controlled by the pointing gesture for further control of the same.

11. Process in accordance with any of Claims 1 to 10, **characterized by the fact** that the sensor (4) scans its detection range (6) in three-dimensional resolution.

12. Process in accordance with any of Claims 1 to 11, **characterized by the fact** that one or several actuators of the following building installations can be controlled by a pointing gesture: lighting, blinds, shutters and/or heating/ventilation.

13. Building installation with a situation detector (3) for implementing the process in accordance with any of claims 1 to 12, comprising a sensor (4) scanning its detection range (6) multidimensionally as well as a control unit (5) for evaluation of the sensor data and with at least one actuator (L₁ to L₄) to be controlled by the control unit (5) of the situation detector (3), to which control unit (5) a storage unit is assigned or the control unit comprises a storage unit in which a predefined pointing gesture is stored as a pattern and the coordinates of at least one bounding box enclosing at least one actuator or virtually representing such an actuator are stored.

14. Building installation in accordance with Claim 13, **characterized by the fact** that several actuators (L₁ to L₄) can be controlled by the control unit (5) in a situative way and independent of one another, and for communication between the control unit (5) and the actuators (L₁ to L₄) a communication medium, for instance a data bus (2), is provided.

15. Building installation in accordance with Claim 13 or 14, **characterized by the fact** that the building installation is connected to an installation bus.

16. Building installation in accordance with any of Claims 13 to 14, **characterized by the fact** that the sensor (4) is a 3D-sensor and is operated to scan the detection range (6) in a spatially and depth resolved way.

17. Building installation in accordance with Claim 16, **characterized by the fact** that the sensor (4) is an optical sensor, notably an infrared sensor, and the determination of distance is effected by time-of-flight detection.

## Revendications

1. Procédé pour faire fonctionner une installation de bâtiment avec un moniteur de situation (3), comprenant un capteur (4) qui détecte sa région de surveillance (6) de manière multidimensionnelle ainsi qu' une unité de commande (5) qui sert à évaluer les données du capteur et au moyen de laquelle au moins un actionneur (L1 à L4) d'une installation technique de bâtiment peut être commandé, la commande côté utilisateur dudit au moins un actionneur (L1 à L4) ayant lieu par actionnement gestuel, **caractérisé en ce que** pour commander un actionneur (L1 à L4), les données détectées par le moniteur de situation (3) sont évaluées par rapport à la présence d'un geste de pointage, l'information de direction contenue dans le geste de pointage étant utilisée pour reconnaître une demande de commande d'actionneur, **en ce que** lors de la disposition du système, au moins un actionneur (L1 à L4) qui peut être commandé par un geste de pointage est défini dans le système de coordonnées des données détectées par le capteur (4) par un volume englobant comprenant l'actionneur (L1 à L4) ou représentant l'actionneur virtuellement, et **en ce que** cet actionneur (L1 à L4) est actionné du côté système si l'utilisateur effectue un geste de pointage prédéfini vers le volume englobant (13, 13.1), pour lequel le geste de pointage contient une information de direction, le capteur (4) dérive l'information de direction souhaitée du geste de pointage détecté et le vecteur (V) de la direction de pointage est calculé afin de vérifier s'il tire à un volume englobant défini (13, 13.1).

2. Procédé selon la revendication 1, **caractérisé en ce qu'**au moins une des dimensions du volume englobant (13, 13.1) est plus grand que la même dimension de l'actionneur qu'il renferme.

3. Procédé selon la revendication 2, **caractérisé en ce que** toutes les dimensions du volume englobant sont plus grand que les dimensions correspondantes de l'actionneur (L1 à L4) et le volume englobant (13, 13.1) est aligné par rapport à l'actionneur (L1 à L4) de sorte que l'actionneur (L1 à L4) soit centré dans le volume englobant (13, 13.1) au moins par rapport à deux dimensions.

4. Procédé selon l'une des revendications 1 à 3, **caractérisé en ce que** plusieurs actionneurs (L1, L2 ou L3, L4), notamment similaires, sont combinés dans un volume englobant (13, 13.1).

5. Procédé selon l'une des revendications 1 à 4, **caractérisé en ce qu'**au moins un volume englobant prévu pour représenter un actionneur virtuel est défini qui est séparé spatialement de l'actionneur réel.

6. Procédé selon l'une des revendications 1 bis 5, **caractérisé en ce qu'**un bras au moins sensiblement allongé (14) d'un utilisateur (15) est défini comme un geste de pointage.

7. Procédé selon l'une des revendications 1 à 6, **caractérisé en ce que** pour distinguer un geste de pointage exécuté pour entraîner un actionneur (L1 à L4) d'un mouvement similaire aléatoire, le geste de pointage doit satisfaire au moins une condition de vérification pour être identifié comme tel.

8. Procédé selon la revendication 7, **caractérisé en ce qu'**une condition de vérification comprend une évaluation dépendante du temps et/ou de la fréquence de mouvement d'un geste de pointage potentiel détecté qui est évalué comme tel lorsque la au moins une condition de vérification est remplie.

9. Procédé selon l'une des revendications 1 à 8, **caractérisé en ce que** pendant le fonctionnement de l'installation de bâtiment avec commande de geste de pointage, après l'établissement de l'installation de bâtiment et après détection d'un geste de pointage pour déterminer la direction de pointage, le vecteur (V) de la direction du pointage est défini dans le système de coordonnées du capteur (4).

10. Procédé selon l'une des revendications 1 à 9, **caractérisé en ce qu'**un premier geste de pointage est suivi d'un geste subséquent pour une commande supplémentaire de l'actionneur commandé par le geste de pointage pour une commande supplémentaire de celui-ci.

11. Procédé selon l'une des revendications 1 à 10, **caractérisé en ce que** le capteur (4) détecte sa région de surveillance (6) dans une résolution tridimensionnelle.

12. Procédé selon l'une des revendications 1 à 11, **caractérisé en ce qu'**un ou plusieurs actionneurs des installations techniques de bâtiment suivantes peuvent être commandés par un geste de pointage: Eclairage, stores, volets roulants et/ou chauffage/ventilation.

13. Installation de bâtiment avec un moniteur de situation (3) pour l'application du procédé selon l'une des revendications 1 à 12, comprenant un capteur (4) qui détecte sa région de surveillance (6) de manière multidimensionnelle ainsi qu'une unité de commande (5) qui sert à évaluer les données du capteur et avec au moins un actuateur (L₁ à L₄) à être commandé par l'unité de commande (5) du moniteur de situation (3), à laquelle unité de commande une unité de stockage est affectée ou l'unité de commande comprend une unité de stockage dans laquelle un geste de pointage prédéfini sous la forme d'un motif et les coordonnées d'au moins un volume englobant renfermant au moins un actionneur ou représentant virtuellement un tel actionneur sont stockées.

14. Installation de bâtiment selon la revendication 13, **caractérisé en ce qu'**une pluralité d'actionneurs (L1 à L4) peuvent être commandés indépendamment les uns des autres par l'unité de commande (5) en fonction de la situation, et un moyen de communication, tel qu'un bus de données (2), est prévu pour communiquer entre l'unité de commande (5) et les actionneurs (L1 à L4).

15. Installation de bâtiment selon la revendication 13 ou 14, **caractérisé en ce que** l'installation du bâtiment est connectée à un bus d'installation.

16. Installation de bâtiment selon l'une des revendications 13 à 14, **caractérisé en ce que** le capteur (4) est un capteur 3D et est utilisé pour détecter la région de surveillance (6) avec une résolution spatiale et en profondeur.

17. Installation de bâtiment selon la revendication 16, **caractérisé en ce que** le capteur (4) est un capteur optique, notamment un capteur infrarouge, et la distance est déterminée par détection time-of-flight.
